Europäisches Patentamt

European Patent Office

Office européen des brevets

(19)

(11) Numéro de publication : **0 078 741**
**B1**

(12) **FASCICULE DE BREVET EUROPÉEN**

(45) Date de publication du fascicule du brevet :
20.08.86

(51) Int. Cl.⁴ : **G 01 B 11/02, G 01 B 11/06,**
**G 01 B 11/24**

(21) Numéro de dépôt : **82401986.3**

(22) Date de dépôt : **27.10.82**

(54) **Procédé de mesure dimensionnelle sans contact de poutrelles métalliques et appareil de mise en oeuvre.**

(30) Priorité : **02.11.81 FR 8120623**

(43) Date de publication de la demande :
**11.05.83 Bulletin 83/19**

(45) Mention de la délivrance du brevet :
**20.08.86 Bulletin 86/34**

(84) Etats contractants désignés :
**AT BE CH DE FR GB IT LI LU NL SE**

(56) Documents cités :
**EP-A- 0 020 317**
**FR-A- 2 297 400**

(73) Titulaire : **INSTITUT DE RECHERCHES DE LA SIDE-
RURGIE FRANCAISE (IRSID)**
**185, rue du Président Roosevelt**
**F-78105 Saint Germain-en-Laye Cédex (FR)**

(72) Inventeur : **Bobrie, Marc**
**5, rue des Saules**
**54230 Neuves Maisons (FR)**
Inventeur : **Campas, Jean-Jacques**
**Lotissement La Source Colligny**
**F-57530 Courcelles-Chaussy (FR)**

(74) Mandataire : **Ventavoli, Roger et al**
**INSTITUT DE RECHERCHES DE LA SIDERURGIE**
**FRANCAISE (IRSID) 185, rue Président Roosevelt**
**F-78105 Saint-Germain-en-Laye (FR)**

## Description

La présente invention concerne un procédé de mesure dimensionnelle sans contact de poutrelles métalliques et un appareil pour la mise en œuvre de ce procédé.

Les poutrelles (on désigne ici par ce vocable les profilés en « H » et en « I ») sont généralement mises en œuvre en étant aboutées les unes aux autres, par exemple, par soudage ou boulonnage. Ces deux sortes d'assemblage imposent des tolérances dimensionnelles étroites des poutrelles au cours de leur fabrication par laminage. Or, cette opération de laminage peut entraîner des défauts dimensionnels, par exemple, de la façon suivante :

Au cours du laminage des poutrelles dans une cage universelle, l'élargissement des ailes étant laissé libre, la symétrie des profilés n'est pas assurée suffisamment. La table et les outillages d'entrée de la cage universelle jouent un rôle important pour le réglage de cette symétrie. Toutefois, en raison des imprécisions sur la largeur des ailes des ébauches initiales et du fait que cette largeur augmente à chaque passe, la table de rouleaux amenant les poutrelles à la cage n'est pas forcément réglée dans une position permettant d'engager la poutrelle de façon symétrique. Pour la même raison, les défauts dimensionnels des poutrelles ne peuvent pas être corrigés complètement par la cage finisseuse.

Or, les poutrelles sont mises en œuvre en l'état à leur sortie de l'installation de laminage, sans qu'aucune opération complémentaire puisse en corriger les défauts dimensionnels éventuels. Si ceux-ci sont repérés par la suite, par exemple au cours du montage de l'ossature métallique d'un bâtiment, on est parfois obligé d'arrêter la construction pour remplacer les poutrelles non conformes.

On comprend donc le besoin d'effectuer une mesure dimensionnelle exacte des poutrelles à l'usine de laminage, soit en vue de les classer selon leur exactitude dimensionnelle avant leur envoi à la clientèle, soit pour pouvoir intervenir en correction par réglage des paramètres de marche du laminoir.

On a déjà pensé répondre à ce besoin grâce aux techniques de mesure par voie optique qui présentent l'avantage d'éviter tout contact matériel avec les poutrelles. Par exemple le document EP-A0 020 317 décrit une technique de mesure sans contact combinant la méthode de la télémétrie par triangulation optique sur une face de l'âme avec la méthode d'ombre par masquage partiel de réseaux linéaires d'éléments photosensibles sur lesquels se projette l'ombre des ailes. On citera également le document FR-A-2 297 400 qui décrit une technique de mesure d'épaisseur d'objets par triangulation d'un faisceau laser au moyen d'un balayage des surfaces opposées de l'objet permettant un calcul des écarts des temps de retour des rayons réfléchis vers des détecteurs photosensibles.

La présente invention a pour but la détermination des dimensions de chaque partie constitutive des poutrelles métalliques ainsi que de leurs positions relatives et ceci sans nécessiter de contacts matériels avec les poutrelles.

A cet effet, la présente invention a pour objet un procédé de mesure dimensionnelle sans contact de poutrelles métalliques, du type de celles profilées de « H » ou de « I » comportant une âme et deux ailes, composées chacune de deux demi-ailes, procédé faisant appel conjointement à la télémétrie et à la méthode d'ombre, et selon lequel, l'âme étant considérée à l'horizontale,

a) on détermine la position et l'orientation d'une face de l'âme en effectuant une mesure de distance par télémétrie, notamment par triangulation optique, pour deux points au moins situés en des endroits différents sur la largeur de ladite face,

b) on détermine le niveau en hauteur d'une extrémité d'une aile d'une part, en émettant entre les deux ailes un faisceau lumineux dirigé vers la face intérieure de l'aile de façon que le faisceau soit partiellement intercepté par ladite face, l'autre partie se propageant au-delà de l'extrémité de l'aile dont on détermine le niveau, et, d'autre part, en détectant, de l'autre côté de l'aile, la position du lieu de transition entre la zone éclairée et la zone non éclairée par le faisceau,

c) on détermine la position et l'orientation de ladite aile en effectuant une mesure de distance par télémétrie, notamment par triangulation optique, pour deux points au moins situés à des niveaux différents sur la face extérieure de ladite aile,

d) et on calcule, à partir des données recueillies dans les opérations a), b) et c) ci-avant, la largeur de la demi-aile correspondant à l'aile dont on a déterminé le niveau en hauteur de l'extrémité.

On peut également, en reproduisant l'opération b) ci-dessus pour les deux extrémités d'une même aile et en effectuant l'opération c) sur ladite aile, calculer la largeur de cette dernière.

De même en reproduisant l'opération a) pour les deux faces de l'âme, on peut calculer l'épaisseur de celle-ci. Bien entendu, on peut également connaître l'épaisseur de l'âme à partir des caractéristiques de la cage de poutrelle.

L'invention a aussi pour objet un appareil de mise en œuvre du procédé comprenant des moyens de télémétrie (16, 16'), notamment par triangulation optique, pour déterminer la position et l'orientation d'une face de l'âme (2) par réflexion de lumière sur ladite face en au moins deux points $(B_1, B_2)$ décalés sur la largeur de l'âme (2), et caractérisé en ce qu'il comprend également :

au moins un couple émetteur-récepteur de lumière (5, 12) dont l'émetteur est disposé entre les deux ailes (3, 4) de la poutrelle (1) et émet un faisceau lumineux dirigé vers la face intérieure d'une demi-aile (3a) de façon qu'une partie seulement du faisceau lumineux soit interceptée par cette dernière, l'autre partie se propageant au-delà de l'extrémité $(E_1)$ de l'aile ; et dont le récepteur (12) est disposé en regard de l'émetteur (5) du côté de la face extérieure de l'aile (3) et délivre un signal représentatif du niveau en hauteur du lieu de transition entre la zone éclairée et la zone laissée dans l'ombre de la demi-aile (3a),

des moyens de télémétrie (14, 14'), notamment par triangulation optique, pour déterminer la position et l'orientation de ladite aile (3) par réflexion de lumière sur la face extérieure de l'aile en au moins deux points $(A_1, A'_1)$ décalés sur la largeur de ladite face,

et un système de traitement électronique pour calculer, à partir des signaux issus du couple émetteur-récepteur (5, 12), et des moyens de télémétrie (14, 14') et (16, 16'), la largeur de la demi-aile placée entre l'émetteur (5) et le récepteur (12).

Grâce à l'invention, on peut connaître la dimension exacte de chaque partie constitutive du profilé, ainsi que leurs positions relatives, et ceci sans nécessiter un contact avec le produit. Il est alors aisé de classer les poutrelles selon leur exactitude dimensionnelle et/ou conformationnelle en vue de leur expédition à la clientèle. On peut également agir en correction des défauts détectés en intervenant sur le réglage des paramètres de marche du laminage, soit pour la poutrelle suivante, soit pour celle-là même dont on a détecté les défauts.

L'invention sera bien comprise et d'autres caractéristiques et avantages ressortiront plus clairement au vu de la description qui suit, donnée en référence aux dessins annexés qui représentent schématiquement, et uniquement à titre d'exemple, des modes de réalisation de l'invention, sur lesquels :

la figure 1 montre le principe de la mesure dimensionnelle des parties du profilé définissant une poutrelle en « H », suivant un mode de réalisation du procédé selon l'invention.

La figure 2 représente schématiquement le calcul d'une largeur d'une demi-aile de la poutrelle.

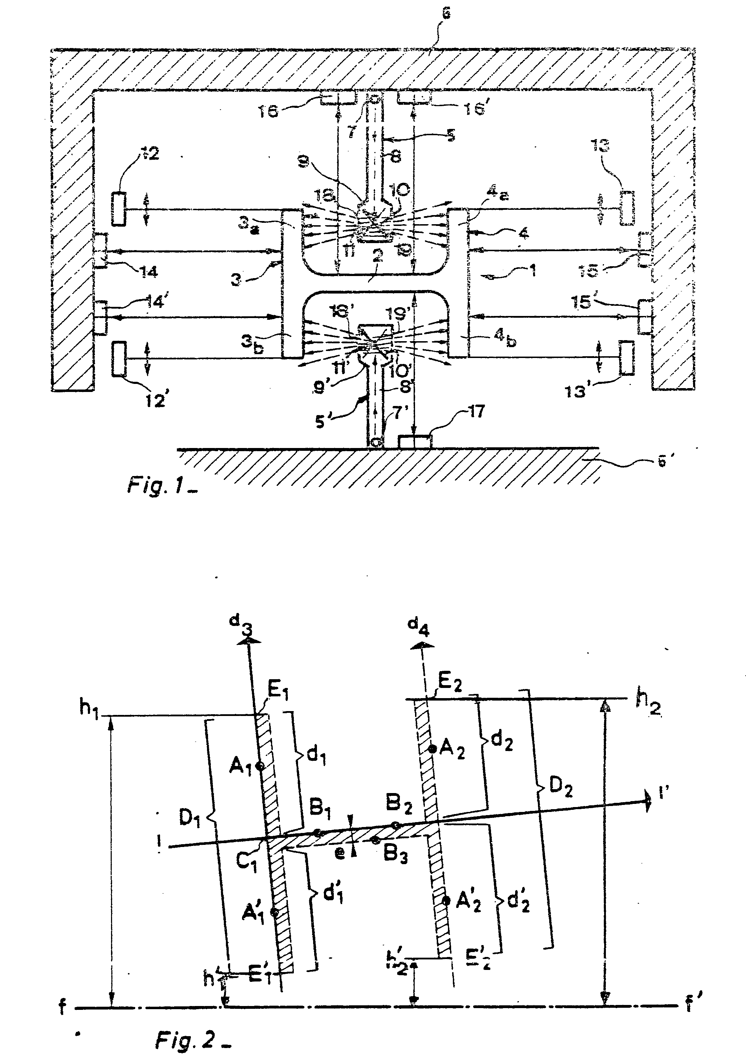

En se référant à la figure 1, une poutrelle 1 profilée en « H » se déplace en direction de l'observateur sur une ligne de rouleaux de transfert (non représentée sur la figure) qui se trouve à la sortie de la cage finisseuse. La poutrelle 1 est constituée d'une âme 2 reliant en leur milieu deux ailes 3 et 4 qui sont perpendiculaires à l'âme 2.

Comme on le voit, cette dernière étant à l'horizontale, l'opération de la mesure dimensionnelle de la largeur des demi-ailes suivant le mode principal de réalisation du procédé selon l'invention se compose des séquences a), b), c), et d) définies auparavant et explicitées en détail dans ce qui suit :

a) Détermination du niveau en hauteur de l'extrémité des ailes.

Pour la détermination de la position des extrémités, d'une part, des ailes, deux unités émettrices de lumière 5 et 5' sont disposées entre les ailes 3 et 4, l'une au-dessus de l'autre en ménageant entre elles un passage pour le défilement de la poutrelle 1.

Les unités émettrices 5 et 5' sont montées respectivement sur un châssis 6 et un bâti inférieur 6' tous deux fixés et chaque unité émet un faisceau lumineux vers les faces intérieures des ailes 3 et 4. Les deux unités émettrices 5, 5' sont identiques entre elles. Chacune est formée d'un élément tubulaire vertical 8, (8') canalisant la lumière depuis une source ponctuelle 7, (7'), placée à une extrémité fermée de l'élément 8 (par exemple une ampoule électrique à filament) jusqu'à un bloc optique 9, (9') placé entre les ailes et monté à l'extrémité de l'élément 8. Ce bloc optique est un corps creux muni sur sa paroi latérale de deux ouvertures 18, 19 (18', 19') chacune en regard de la surface intérieure d'une aile de la poutrelle. La cavité intérieure du bloc est équipée de deux déflecteurs lumineux 10, 11 (10', 11') placés derrière chacune des deux ouvertures latérales. Chaque déflecteur présente une orientation sur la verticale telle que la lumière qu'il reçoit de la source 7 (7') est déviée au travers d'une ouverture latérale 18 ou 19 (18' ou 19') en direction de la surface intérieure des ailes. De préférence, les déflecteurs 18, 19 (18', 19') sont des surfaces diffusantes plutôt que réfléchissantes de manière à émettre un faisceau de rayons parallèles ou du moins sensiblement parallèle en direction des ailes de la poutrelle.

Comme on le comprend, chaque unité émettrice 5, 5' regroupe donc deux émetteurs destinés chacun à une des demi-ailes opposées 3a, 4a (3b, 4b) constitutives deux à deux (3a, 3b et 4a, 4b) des deux ailes 3 et 4 du profilé.

Comme on le voit sur la figure 1, chaque faisceau lumineux issu d'une ouverture latérale (18, 19, 18', 19') est partiellement éclipsé par la face intérieure de la demi-aile (respectivement 3a, 4a, 3b, 4b) vers laquelle il est dirigé et la partie non interceptée du faisceau se propage au-delà de l'extrémité de chaque demi-aile.

D'autre part, quatre récepteurs optiques linéaires 12, 12' et 13, 13', identiques entre eux, sont disposés sur le trajet de la partie non interceptée des faisceaux lumineux. Ces récepteurs comprennent une optique classique symbolisée sur la figure par les doubles petites flèches verticales non référencées et dans le plan image de laquelle a été placé un élément photosensible capable de délivrer un signal représentatif de la hauteur du lieu de transition entre la zone éclairée par le faisceau sur les récepteurs et la zone maintenu dans l'ombre de la demi-aile. Les récepteurs à utiliser peuvent être avantageusement des récepteurs à réseau linéaire de photodiodes d'un type déjà connu en soi et disponibles dans le commerce, par exemple sous la marque « RETICON type 1 024 H20 ».

b) Détermination de la position et de l'orientation d'une aile.

Pour cette détermination, on effectue une triangulation optique pour deux points au moins sur la face extérieure de l'aile concernée, ces deux points étant décalés sur des niveaux différents en hauteur. Le principe de la triangulation optique étant déjà connu en soi, il est inutile de le décrire en détails ici.

Afin d'effectuer la triangulation optique, on utilise un couple projecteur-détecteur pour chaque point à mesurer. A cet effet, quatre couples projecteurs-détecteurs, ou triangulateurs optiques 14, 14' et 15, 15' sont disposés en regard des faces extérieures des ailes 3 et 4. Ces quatre couples sont jumelés deux à deux à chacune des deux paires (14, 14' et 15, 15') ainsi formées, est affectée à l'une des deux ailes de la poutrelle 1 de façon à pouvoir déterminer la position de deux points sur la face extérieure de chacune de celles-ci. Chaque couple de projecteur-détecteur optique est représenté par un simple bloc sur la figure 1 pour ne pas la surcharger inutilement.

Les détecteurs délivrent des signaux électriques représentatifs de la position des points $A_1$, $A'_1$ et $A_2$, $A'_2$ (figure 2) par rapport à une référence choisie à l'avance. Cette référence peut être obtenue par tout moyen approprié bien connu, par exemple à l'aide d'un calibrage initial par une fausse poutrelle servant de gabari. La même technique de mise au zéro de référence peut bien entendu être utilisée à l'égard des couples émetteurs-récepteurs 5, 5' vu ci-avant.

c) Détermination de la position et de l'orientation d'une face de l'âme.

Pour la détermination de la position et de l'orientation d'une face de l'âme 2, par exemple la face supérieure, on effectue une triangulation optique pour deux points $B_1$ et $B_2$ sur la face supérieure de l'âme décalés selon la largeur de celle-ci. A cet effet, deux couples de projecteurs-détecteurs optiques, ou triangulateurs optiques, 16 et 16' sont fixés au châssis 6 au-dessus de la poutrelle.

Les récepteurs de ces couples optiques délivrent des signaux électriques représentatifs de la position des points $B_1$ et $B_2$ sur la face supérieure de l'âme 2.

Selon un mode de réalisation de l'invention, on effectue une triangulation optique pour seulement un point $B_3$ sur l'autre face de l'âme, en l'occurrence sur la face inférieure dans l'exemple considéré, afin de déterminer à partir des signaux ainsi délivrés, l'épaisseur « e » de l'âme. A cet effet, un couple de projecteur-détecteur optique 17 est disposé en regard de la face inférieure de l'âme 2. Le détecteur de ce couple optique délivre un signal électrique de la position du point $B_3$ sur la face inférieure de l'âme.

d) Calcul des dimensions à partir des signaux.

Pour la détermination des dimensions de la poutrelle, on peut utiliser un système de traitement électronique, par exemple un microprocesseur qui est associé aux récepteurs et détecteurs optiques cités ci-dessus.

En se référant à la figure 2, les opérations de calcul sont les suivantes :

les signaux fournis par les récepteurs optiques linéaires 12, 12' et 13, 13' permettent de déterminer les positions respectives des points $E_1$, $E'_1$ et $E_2$, $E'_2$ représentant respectivement les extrémités des ailes 3 et 4. Dans l'exemple considéré, ces positions sont définies par les cotes $h_1$, $h'_1$ et $h_2$, $h'_2$, de $E_1$, $E'_1$ et $E_2$, $E'_2$ respectivement par rapport à un plan de référence qui peut être par exemple la surface du bâti 6' représenté par l'axe ff'. (Ce système de référence est préféré ici au calibrage par gabari évoqué précédemment, uniquement pour mieux faire comprendre l'invention à l'aide de la figure 2).

les signaux fournis par les triangulateurs optiques 14, 14' et 15, 15' permettent la détermination des points $A_1$, $A'_1$ et $A_2$, $A'_2$ et, par conséquent donnent la position et l'orientation des droites $d_3$ et $d_4$, représentatives de la face extérieure des ailes 3 et 4.

De la même façon, à l'aide des triangulateurs optiques 16 et 16', on détermine la position et l'orientation de la ligne 11' représentative de la face supérieure de l'âme 2.

A partir de ces informations, il est aisé de déterminer la position du point $C_1$ d'intersection des droites $d_3$ et 11'. La position de $E_1$ étant définie, on détermine la mesure $d_1$ du segment $C_1$ $E_1$, caractérisant la largeur de la demi-aile supérieure 3a.

Un calcul identique est réalisé pour les trois autres demi-ailes 3b, 4a et 4b.

La largeur totale $D_1$ de l'aile 3 est obtenue de la même façon, par le repérage du niveau des extrémités $E_1$ et $E'_1$ de l'aile et de la droite $a_1$ $a'_1$.

La même opération est conduite pour le calcul de $D_2$, mesure de la longueur du segment $E_2$ $E'_2$ caractérisant la largeur de l'aile 4. Par ailleurs, la détermination des droites $d_3$ et $d_4$ et la connaissance, par les paramètres de réglage du laminage, de l'épaisseur « a » des ailes, permet aisément au besoin de calculer la largeur de champ entre les deux ailes à quelque niveau que l'on veut.

En ce qui concerne l'épaisseur « e » de l'âme 2, il y a deux manières de calcul.

Premièrement l'épaisseur « e » peut être calculée à partir des données délivrées par la cage de laminage, comme pour l'épaisseur d'ailes évoquée ci-avant.

Selon un autre mode de réalisation de l'invention vu précédemment, l'épaisseur « e » de l'âme 2 peut être calculée à partir de la position des trois points $B_1$, $B_2$ et $B_3$, les faces supérieure et inférieure de l'âme 2 étant considérées comme parallèles entre elles. La connaissance de la position d'un seul point $B_3$ sur la face inférieure permet alors le calcul de la distance séparant les deux faces de l'âme, c'est-à-dire, l'épaisseur « e ».

Avec cette épaisseur « e », on peut facilement calculer la largeur $d'_1$ et $d'_2$ des deux demi-ailes inférieures 3b et 4b, soit :

$$d'_1 = D_1 — d_1 — e$$

et

$$d'_2 = D_2 — d_2 — e$$

Cette façon de procéder, utilisant la largeur d'aile et l'épaisseur d'âme pour déterminer, à partir de la largeur d'une demi-aile, la largeur de la demi-aile complémentaire, constitue une variante de mise en œuvre de l'invention. Elle se distingue de la mise en œuvre décrite précédemment résidant en une répétition de la méthode élémentaire de calcul d'une demi-aile, par le fait que trois couples seulement (16, 16' et 17 de triangulation optique attachés à l'âme de la poutrelle sont nécessaires et non quatre. L'avantage réside notamment dans le moindre encombrement du dispositif de mesure ainsi que dans l'économie d'un couple projecteur-émetteur.

Il doit être souligné cependant que cette variante se fonde sur l'hypothèse que les deux faces de l'âme sont parallèles, ce qui est d'ailleurs généralement le cas.

Le procédé selon la présente invention permet une mesure dimensionnelle exacte et sans contact des poutrelles et trouve des applications étendues dans le domaine métallurgique.

Il va de soi que diverses modifications de détail, variantes ou équivalentes pourraient être apportées.

En particulier, on peut doubler le nombre de couples de triangulation optique affectés aux ailes de la poutrelle, une paire de couples étant destinée à une mesure de position de deux points lumineux sur chaque demi-aile. Une telle variante, correspondant à la mise en œuvre de l'invention la plus complète que sache faire les inventeurs, permet de déterminer avec la précision souhaitée les caractéristiques dimensionnelles des poutrelles dans le cas où les ailes ne sont pas planes mais sont profilées en V.

Il doit être également noté que la technique de mesure sans contact selon l'invention, combinant une méthode de télémétrie par triangulation optique à une méthode d'ombre par masquage partiel de réseaux linéaires d'éléments photosensibles, n'est pas nouvelle en soi.

Toutefois, les systèmes connus à cet égard, tel que par exemple celui décrit dans la demande EP-A-0 020 317, ne présentent pas le niveau de performances atteint par l'invention. En particulier, celle-ci présente des avantages, liés notamment à la conception des unités émettrices 5, 5' et à leur emplacement entre les ailes, qui ne se retrouvent pas dans l'état de la technique et qui n'échapperont pas à l'homme de métier.

**Revendications**

1. Procédé de mesure dimensionnelle sans contact de poutrelles métalliques, du type de celles profilées en « H » ou en « I » comportant une âme et deux ailes, composées chacune de deux demi-ailes, procédé faisant appel conjointement à la télémétrie et à la méthode d'ombre, et selon lequel, l'âme étant considérée à l'horizontale,

a) on détermine la position et l'orientation d'une face de l'âme en effectuant une mesure de distance par télémétrie, notamment par triangulation optique, pour deux points au moins situés en des endroits différents sur la largeur de ladite face, et caractérisée en ce que :

b) on détermine le niveau en hauteur d'une extrémité d'une aile, d'une part, en émettant entre les deux ailes un faisceau lumineux dirigé vers la face intérieure de l'aile de façon que le faisceau soit partiellement intercepté par ladite face, l'autre partie se propageant au-delà de l'extrémité de l'aile dont on détermine le niveau, et, d'autre part, en détectant, de l'autre côté de l'aile, la position du lieu de transition entre la zone éclairée et la zone non éclairée par le faisceau,

c) on détermine la position et l'orientation de ladite aile en effectuant une mesure de distance par télémétrie, notamment par triangulation optique, pour deux points au mois situés à des niveaux différents sur la face extérieure de ladite aile,

d) et on calcule, à partir des données recueillies dans les opérations a), b), et c) ci-avant, la largeur de la demi-aile correspondant à l'aile dont on a déterminé le niveau en hauteur de l'extrémité.

2. Procédé selon la revendication 1, caractérisé en ce que l'on répète l'opération b) pour l'autre extrémité de ladite aile et on calcule la largeur de la demi-aile complémentaire.

3. Procédé selon les revendications 1 ou 2, caractérisé en ce que l'on répète l'opération b) pour l'une des extrémités de l'autre aile et on répète l'opération c) pour cette autre aile et on calcule la largeur de la demi-aile correspondant à ladite extrémité.

4. Procédé selon la revendication 3, caractérisé en ce qu'on répète l'opération b) pour l'autre extrémité de l'aile et on calcule la largeur de la demi-aile complémentaire.

5. Procédé selon l'une quelconque des revendications précédentes, caractérisé en ce que l'on calcule l'épaisseur de l'âme en déterminant, par triangulation optique, la position d'un point seulement sur la face de l'âme opposée à celle où on a effectué l'opération a).

6. Appareil de mise en œuvre du procédé de mesure dimensionnelle des poutrelles selon l'une des revendications 1 à 5 comprenant :

des moyens de télémétrie (16, 16'), notamment par triangulation optique, pour déterminer la position et l'orientation d'une face de l'âme (2) par réflexion de lumière sur ladite face en au moins deux points ($R_1$, $B_2$) décalés sur la largeur de l'âme (2) et caractérisé en ce qu'il comprend également :

au moins un couple émetteur-récepteur de lumière (5, 12) dont l'émetteur est disposé entre les deux ailes (3, 4) de la poutrelle (1) et émet un faisceau lumineux dirigé vers la face intérieure d'une demi-aile (3a) de façon qu'une partie seulement du faisceau lumineux soit interceptée par cette dernière, l'autre partie se propageant au-delà de l'extrémité (E₁) de l'aile ; et dont le récepteur (12) est disposé en regard de l'émetteur (5) du côté de la face extérieure de l'aile (3) et délivre un signal représentatif du niveau en hauteur du lieu de transition entre la zone éclairée et la zone laissée dans l'ombre de la demi-aile (3a),

des moyens de télémétrie (14, 14'), notamment par triangulation optique, pour déterminer la position et l'orientation de ladite aile (3) par réflexion de lumière sur la face extérieure de l'aile en au moins deux points (A₁, A'₁) décalés sur la largeur de ladite face,

et un système de traitement électronique pour calculer, à partir des signaux issus du couple émetteur-récepteur (5, 12), et des moyens de télémétrie (14, 14') et (16, 16'), la largeur de la demi-aile placée entre l'émetteur (5) et le récepteur (12).

7. Appareil selon la revendication 6, caractérisé :

en ce qu'il comprend quatre couples « émetteur-récepteur », dont les émetteurs disposés entre les ailes (3, 4) de la poutrelle sont regroupés par paire, formant des unités émettrices (5, 5'). Ces deux paires étant placées en regard l'une au-dessus de l'autre en ménageant entre elles un passage pour le défilement de l'âme (2) de la poutrelle, et dont les récepteurs (12, 12', 13, 13') sont disposés chacun en regard d'une demi-aile (3a, 3b, 4a, 4b) de la poutrelle,

en ce qu'il comprend au moins quatre moyens de télémétrie (14, 14', 15, 15') disposés deux par deux en regard de chaque aile de la poutrelle,

et en ce qu'il comprend au moins trois moyens de télémétrie (16, 16', 17) dont deux (16, 16') sont disposés en regard d'une face de l'âme (2) et dont un au moins (17) est disposé en regard de l'autre face de l'âme (2).

8. Appareil selon la revendication 7, caractérisé en ce que les moyens de télémétrie disposés en regard des ailes de la poutrelle sont au nombre de huit, lesdits moyens étant regroupés par paires, une paire étant disposée en regard de chaque demi-aile de la poutrelle.

9. Appareil selon la revendication 7, caractérisé en ce que chaque unité émettrice de lumière (5, 5') est constituée par un élément tubulaire vertical (8) fermé à une extrémité, comportant à son extrémité fermée une source de lumière (7) et muni à son autre extrémité située entre les ailes d'un bloc optique (9) présentant des ouvertures latérales (18, 19) en regard de chacune des ailes de la poutrelle et équipé intérieurement de deux déflecteurs lumineux (10, 11) incliné sur la verticale de manière à dévier la lumière reçue de la source (7) au travers des ouvertures latérales (18, 19) en direction de la surface intérieure des ailes de la poutrelle.

10. Appareil selon la revendication 9, caractérisé en ce que les déflecteurs (10, 11) sont pourvus de surfaces diffusantes.

11. Appareil selon les revendications 7 ou 9, caractérisé en ce que les récepteurs de lumière (12, 12', 13, 13') comporte des éléments photosensibles constitués par des réseaux linéaires de photodiodes alignées selon la verticale.

**Claims**

1. A non-contact dimensional measuring process for metallic profiles of the « H » or « I » type comprising a web and two legs each consisting of two half-legs, said process making use jointly of telemetry and the shadow technique and according to which, considering the web on the horizontal,

a) the position and the orientation of one surface of the web is determined by performing a distance measurement by telemetry, in particular by optical triangulation, for two points at least situated in different places on the width of said surface, and characterized in that :

b) the height of one end of a leg is determined, on the one hand, by transmitting between the two legs a bundle of rays directed toward the inner surface of the leg in such a way that the bundle is partly intercepted by said surface, the other part spreading beyond the end of the leg whose height is being determined and, on the other hand, by detecting, on the other side of the leg, the position of the point of transition between the zone illuminated by the bundle and the zone not illuminated thereby,

c) the position and the orientation of said leg is determined by performing a distance measurement by telemetry, in particular by optical triangulation, for two points at least situated at different levels on the outer surface of said leg,

d) and the width of the half-leg corresponding to the leg for which the height of the end was determined is calculated on the basis of the data gathered in operations a), b) and c) above.

2. The process according to claim 1, characterized in that operation b) is repeated for the other end of said leg and the width of the complementary half-leg is calculated.

3. The process according to claims 1 or 2, characterized in that operation b) is repeated for one of the ends of the other leg and operation c) is repeated for this other leg and the width of the half-leg corresponding to said end is calculated.

4. The process according to claim 3, characterized in that operation b) is repeated for the other end of the leg and the width of the complementary half-leg is calculated.

5. The process acording to any fo the above claims, characterized in that the thickness of the web is calculated by determining, by optical triangulation, the position of one point only on the surface of the web opposite that where operation a) was performed.

6. An apparatus for carrying out the dimensional measuring process for profiles according to one of claims 1 to 5, comprising :

telemetric means (16, 16′), in particular by optical triangulation, for determining the position and the orientation of one surface of the web (2) by light reflection on said surface at at least two points (R₁, B₂) staggered on the width of the web (2) and characterized in that it also comprises :

at least one light transmitter-receiver pair (5, 12) whose transmitter is disposed between the two legs (3, 4) of the profile (1) and transmits a bundle of rays directed toward the inner surface of one half-leg (3a) in such a way that only part of the bundle of rays is intercepted thereby, the other part spreading beyond the end (E₁) of the leg ; and whose receiver (12) is disposed opposite the transmitter (5) on the side of the outer surface of the leg (3) and provides a signal representing the height of the point of transition between the illuminated zone and the zone left in the shadow of the half-leg (3a),

telemetric means (14, 14′), in particular by optical triangulation, for determining the position and the orientation of said leg (3) by light reflection on the outer surface of the leg at at least two points (A₁, A′₁) staggered on the width of said surface,

and an electronic processing system for calculating, on the basis of the signals provided by the transmitter-receiver pair (5, 12) and by the telemetric means (14, 14′) and (16, 16′), the width of the half-leg located between the transmitter (5) and the receiver (12).

7. The apparatus according to claim 6, characterized :

in that it comprises four « transmitter-receiver » pairs whose transmitters disposed between the legs (3, 4) of the profile are grouped in pairs, forming transmitter units (5, 5′). These two pairs being placed opposite one above the other forming a passage therebetween for concealment of the web (2) of the profile, and whose receivers (12, 12′, 13, 13′) are each disposed opposite a half-leg (3a, 3b, 4a, 4b) of the profile,

in that it comprises at least four telemetric means (14, 14′, 15, 15′) disposed two by two opposite each leg of the profile,

and in that it comprises at least three telemetric means (16, 16′, 17) two of which (16, 16′) are disposed opposite one surface of the web (2) and at least one of which (17) is disposed opposite the other surface of the web (2).

8. The apparatus according to claim 7, characterized in that there are eight telemetric means disposed opposite the legs of the profile, said means being grouped in pairs, one pair being disposed opposite each half-leg of the profile.

9. The apparatus according to claim 7, characterized in that each light transmitter unit (5, 5′) consists of a vertical tubular element (8) closed at one end, having at its closed end a light source (7) and provided at its other end situated between the legs with an optical block (9) having lateral openings (18, 19) opposite each of the legs of the profile and equipped on the inside with two light deflectors (10, 11) inclined on the vertical plane so as to deflect the light received from the source (7) across the lateral openings (18, 19) in the direction of the inner surface of the legs of the profile.

10. The apparatus according to claim 9, characterized in that the deflectors (10, 11) are provided with diffusing surfaces.

11. The apparatus according to claims 7 or 9, characterized in that the light receivers (12, 12′, 13, 13′) comprise photosensitive elements consisting of line screens of photodiodes aligned on the vertical plane.

## Patentansprüche

1. Verfahren zur kontaktlosen Dimensionsmessung von H- oder I-förmig prolifierten Metallträgern, die einen Steg und zwei Flansche aufweisen, deren jeder aus zwei Halbflanschen zusammengesetzt ist, wobei sowohl die Entfernungsmessung als auch die Schattenmethode verwendet werden und wobei unter waagrechter Anordnung des Stegs

a) die Stellung und die Ausrichtung einer Stegfläche bestimmt wird mittels eines Entfernungsmeßvorgangs, insbesondere durch optische Dreiecksvermessung wenigstens zweier Punkte an unterschiedlichen Stellen auf der Breite der Fläche, dadurch gekennzeichnet, daß

b) einerseits die Höhe eines Flanschendes gemessen wird, indem zwischen den beiden Flanschen ein Lichtstrahl auf die Innenwand des Flansches derart gerichtet wird, daß der Strahl teilweise von der Fläche aufgefangen wird und sich der andere Teil über das Ende hinaus erstreckt, dessen Höhe gemessen wird und andererseits auf der anderen Seite des Flansches die Stelle des Übergangsbereiches zwischen dem beleuchteten Abschnitt und dem unbeleuchteten Abschnitt des Strahls gemessen wird,

c) die Stellung und die Ausrichtung des Flansches bestimmt wird, indem eine Abstandsmessung durchgeführt wird, insbesondere eine optische Dreiecksvermessung für wenigstens zwei Punkte, die auf unterschiedlichen Höhen auf der Außenfläche des Flansches angeordnet sind und

d) ausgehend von den durch die vorstehenden Verfahrensschritte a), b), c) erhaltenen Werte die Breite des Halbflansches errechnet wird, die zum Flansch gehört, für den die Höhe des Endes bestimmt wurde.

2. Verfahren nach Anspruch 1, dadurch gekennzeichnet, daß der Verfahrensschritt b) für das andere Ende des Flansches wiederholt wird und daß die Breite des komplementären Halbflansches berechnet wird.

3. Verfahren nach Ansprüchen 1 oder 2, dadurch gekennzeichnet, daß der Verfahrensschritt b) für eines der Enden des anderen Flansches wiederholt wird und der Verfahrensschritt c) für den anderen Flansch wiederholt wird und daß die Breite des zugehörigen Halbflansches dieses Endes berechnet wird.

4. Verfahren nach Anspruch 3, dadurch gekennzeichnet, daß der Verfahrensschritt b) für das andere Ende des Flansches wiederholt wird und daß die Breite des komplementären Halbflansches berechnet wird.

5. Verfahren nach einem der vorhergehenden Ansprüche, dadurch gekennzeichnet, daß die Dicke des Steges berechnet wird, indem mittels optischer Dreiecksvermessung die Stellung nur eines Punktes auf der Fläche bestimmt wird, die derjenigen gegenüberliegt, auf der der Verfahrensschritt a) durchgeführt wird.

6. Vorrichtung zur Durchführung der Dimensionsmessung von Trägern nach einem der Ansprüche 1 bis 5, mit:

einer Entfernungsmeßanordnung (16, 16'), insbesondere durch optische Dreiecksvermessung zur Bestimmung der Stellung und der Ausrichtung einer Fläche des Steges (2) durch Lichtreflexion an dieser Fläche an wenigstens zwei Punkten (R1, B2), die entlang der Breite des Steges (2) zueinander verschoben sind, dadurch gekennzeichnet, daß sie zusätzlich aufweist:

wenigstens ein Paar Lichtsender-Lichtempfänger (5, 12), wobei der Sender zwischen den beiden Flanschen (3, 4) des Trägers (1) angeordnet ist und einem Lichtstrahl aussendet zur Innenfläche eines Halbflansches (3a), derart, daß nur ein Teil des Lichtstrahles von letzterem aufgefangen wird, während sich der andere Teil bis jenseits des Endes ($E_1$) des Flansches erstreckt, während der Empfänger (12) gegenüber dem Sender (5) auf der Seite der Außenfläche des Flansches (3) angeordnet ist und ein Signal liefert, das die Höhe des Ortes des Überganges zwischen dem beleuchteten Abschnitt und dem im Schatten des Halbflanches (3a) liegenden Abschnitt darstellt,

eine Entfernungsmeßanordnung (14, 14') insbesondere mittels optischer Dreiecksvermessung zur Bestimmung der Stellung und Ausrichtung des Flansches (3) mittels Lichtreflexion auf der Außenfläche der Flansches an wenigstens zwei Punkten ($A_1$, $A'_1$), die entlang der Breite dieser Fläche zueinander verschoben sind,

und eine elektronischen Verarbeitungsanordnung um ausgehend von den vom Paar Lichtsender-Lichtempfänger (5, 12) sowie den Entfernungsmeßanordnungen (14, 14') und (16, 16') abgegebenen Signalen, die Breite des Halbflansches zwischen dem Sender (5) und dem Empfänger (12) zu berechnen.

7. Vorrichtung nach Anspruch 6, dadurch gekennzeichnet, daß sie:

vier Paar Sender-Empfänger aufweist, wobei die Sender zwischen den Flanschen (3, 4) des Trägers angeordnet um paarweise zusammengefaßt sind, so daß sie Sendereinheiten (5, 5') bilden und diese beiden Paare übereinander und sich gegenüberliegend angeordnet sind, so daß zwischen ihnen ein Raum bleibt für den Durchtritt des Steges (2) des Trägers, während die Empfänger (12, 12', 13, 13') jeweils gegenüber eines Halbflansches (3a, 3b, 4a, 4b) des Trägers angeordnet sind,

daß sie wenigstens vier Entfernungsmeßanordnungen (14, 14', 15, 15') aufweist, die paarweise gegenüber einem jeden Flansch des Trägers angeordnet sind,

und daß sie wenigstens drei Entfernungsmeßanordnungen (16, 16', 17) aufweist, von denen zwei gegenüber einer Fläche des Steges (2) angeordnet sind und wenigstens eine (17) gegenüber der anderen Fläche des Steges (2) angeordnet ist.

8. Vorrichtung nach Anspruch 7, dadurch gekennzeichnet, daß die Anzahl der Entfernungsmeßanordnungen gegenüber den Flanschen des Trägers acht beträgt, wobei sie paarweise zusammengefaßt sind und ein Paar gegenüber einem jeden Halbflansch des Trägers angeordnet ist.

9. Vorrichtung nach Anspruch 7, dadurch gekennzeichnet, daß jede Lichtsendereinheit (5, 5') aus einem senkrechten rohrförmigen Teil (8) besteht, dessen eines Ende geschlossen ist und das an dem geschlossenen Ende eine Lichtquelle (7) aufweist, während sein anderes Ende zwischen den Flanschen eines optischen Blocks (9) angeordnet ist, der seitliche Öffnungen (18, 19) gegenüber einem jeden Flansch des Trägers aufweist und innen mit zwei Lichtdeflektoren (10, 11) versehen ist, die zur Senkrechten derart geneigt sind, daß der von der Quelle (7) stammende Lichtstrahl durch die seitlichen Öffnungen (18, 19) in Richtung zur Innenfläche der Trägerflansche abgelenkt wird.

10. Vorrichtung nach Anspruch 9, dadurch gekennzeichnet, daß die Deflektoren (10, 11) mit diffusen Flächen versehen sind.

11. Vorrichtung nach Ansprüchen 7 oder 9, dadurch gekennzeichnet, daß die Lichtempfänger (12, 12', 13, 13') Fotoelemente aufweisen, die aus linearen Netzen von senkrecht ausgerichteten Fotodioden bestehen.

Fig.1_

Fig.2_